Europäisches Patentamt

(19) European Patent Office

Office européen des brevets

(11) Publication number: **0 321 003 B1**

# (12) EUROPEAN PATENT SPECIFICATION

(45) Date of publication of patent specification :
15.01.92 Bulletin 92/03

(21) Application number : **88202296.5**

(22) Date of filing : **13.10.88**

(51) Int. Cl.⁵: **B60J 7/057**, B60J 7/05

(54) Coupling device in the drive mechanism for a movable panel of an open roof-construction for a vehicle.

(30) Priority : **16.12.87 NL 8703036**

(43) Date of publication of application :
**21.06.89 Bulletin 89/25**

(45) Publication of the grant of the patent :
**15.01.92 Bulletin 92/03**

(84) Designated Contracting States :
**DE FR GB IT NL SE**

(56) References cited :
**EP-A- 0 195 137**
**DE-A- 3 442 601**
**DE-A- 3 509 691**
**FR-A- 2 516 870**
**GB-A- 2 133 460**

(73) Proprietor : **Vermeulen-Hollandia Octrooien II B.V.**
**Küppersweg 9-11**
**NL-2031 EA Haarlem (NL)**

(72) Inventor : **Huyer, Johannes Nicolaas**
**Rietkamp, 4**
**NL-1991 BM Velserbroek (NL)**

(74) Representative : **de Vries, Johannes Hendrik Fokke et al**
**Octrooibureau Los en Stigter B.V. P.O. Box 20052**
**NL-1000 HB Amsterdam (NL)**

## Description

The invention relates to a coupling device according to the preamble of claim 1.

Such a coupling device is known from the German patent specification DE-A-3.146.698. Herein, the coupling member consists of a slide displaceable in transverse direction. As guide element, the coupling member has a guide slot inclining in transverse direction and opening at its front side, the guide slot being able to cooperate with a guide cam formed on the stationary guide. Between the coupling member and the driven part there is provided a leaf spring loading the coupling member in a direction to its coupling position.

This leaf spring is disadvantageous in that it causes additional friction in the locking position of the coupling member, because the leaf spring loads the coupling member against the driving part. Furthermore, the operation of the coupling device can be disturbed since it is possible that, by any cause, the coupling member in its coupling position is unintentionally displaced against the force of the spring, whereby the engagement between the guide slot in the coupling member and the guide cam of the stationary part can not take place any more.

The present invention has the object to provide a coupling device of the type mentioned in the preamble, wherein this disadvantage is removed in an effective way.

For this purpose the coupling device according to the invention is characterized by the features of the characterizing portion of claim 1.

In this way there is no need for a spring in the coupling device anymore, while the proper operation of the coupling device is ensured at any time since the guide elements prevent an undesired displacement of the coupling member in a positive way.

An advantageous embodiment of the coupling device according to the invention is characterized in that the guide elements of the stationary part and the coupling member effect the first initial movement from the coupling position and the last return movement to the coupling position, wherein for each of these movements separate guide elements being provided, and the remaining movements of the coupling member being determined by the guide elements between the coupling member and the driving part.

By providing separate guide elements for the first initial movement from the coupling position and the last return movement to the coupling position it is possible to obtain a locked coupling position of the coupling member without loading the coupling member in sideward direction.

Preferably, the coupling member is connected to the driven part pivotable about a substantially vertical pivot axis between the coupling position and the locking position.

Said pivoting movement of the coupling member between the coupling position and the locking position requires little force of the driving part, and there will not develop any torque causing friction during said pivoting movement.

It is favourable if the coupling member is provided with a stop cam positioned sideways spaced from the pivot axis in the coupling position of the coupling member, and the stationary part being provided with a stop shoulder facing backwardly and lying in the path of the stop cam.

The movement of the stop cam of the coupling member against the stop shoulder of the stationary part effects the first initial movement of the coupling member from the coupling position in a simple and favourable manner.

It is possible to provide the coupling member with a locking nose which is able to engage into a locking recess formed in the stationary part and serving as counter part.

Herein, it is advantageously to form the rear wall of the locking recess in the stationary part partly as a guiding surface inclined backwardly in the direction to the driven part and being adapted to co-operate with a guiding surface formed on the locking nose of the coupling member.

By the co-operation of the guiding surfaces of the locking nose of the coupling member and the stationary part the last return movement of the coupling member to the coupling position is achieved, whereby it is made possible to bring the coupling member into a stable retained position, from which the coupling member can only be dis- placed by the guide elements for the first initial movement.

In a favourable embodiment of the coupling device according to the invention the driving part is provided with a guide slot whose side walls form the guide elements, and the coupling member comprising a guide cam serving as guide element and being in engagement with the guide slot of the driving part.

The engagement between the coupling member and the driving part causes the coupling member to be forcibly guided by the driving part as well as to be positively retained thereby.

Herein, the guide slot in the driving part can be provided with a rear slot portion parallel to the direction of movement of the driving part, an intermediate slot portion inclining to said direction of movement, and a front slot portion substantially transverse to said direction of movement.

The rear slot portion of the guide slot in the driving part causes the retaining of the coupling member in the locking position, the inclined intermediate slot portion effectuates a part of the pivoting movement of the coupling member, and the substantially transverse front slot portion offers a stable coupling position to the coupling member.

Herein it is favourable when in the coupling position of the coupling member, the line of connection between the point of engagement of the coupling member with the driving part and the point of engagement of the coupling member with the driven part extends substantially parallel to the direction of movement of the driving part.

In this way, no torque will develop on the coupling member during the driving of the driven part by the driving part, so that no additional friction occurs and a light driving operation is possible.

Preferably, the driving part is provided with a backwardly facing stop shoulder, and the driven part comprising a forwardly facing stop shoulder lying in the path of said backwardly facing stop shoulder of the driving part.

Consequently, a simple and direct driving of the driven part takes place by the backward sliding movement thereof.

Advantageously, in the coupling position of the coupling member the locking nose thereof is laterally retained with play between a longitudinal edge of the driven part and a longitudinal edge of the stationary part.

In this way the coupling member is fully retained in its coupling position.

The invention will hereafter be elucidated with reference to the drawing which shows an embodiment of the coupling device according to the invention by way of example.

Fig. 1 is a very schematic plan view of an open roof construction for a vehicle, in which the coupling device according to the invention is used.

Fig. 2 shows the enlarged detail II of fig. 1, wherein the parts of the coupling device according to the invention are illustrated separately from each other.

Fig. 3 is a perspective view of the coupling member of the coupling device according to the invention on an enlarged scale.

Fig. 4-11 are plan views corresponding to fig. 2 wherein, however, the parts are illustrated in their assembled condition, and the coupling device is shown in different positions.

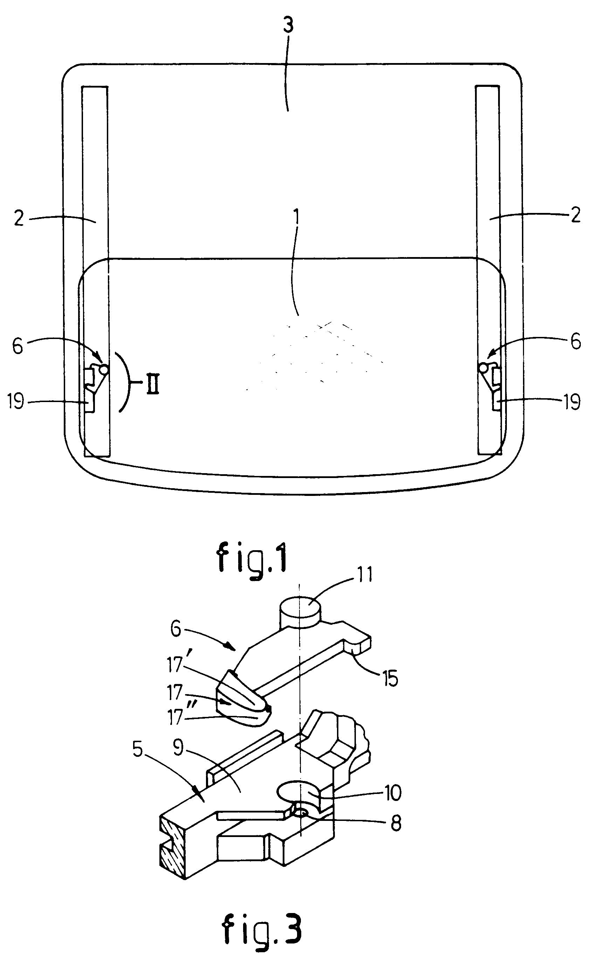

Fig. 1 shows an open roof construction for a vehicle, which is constructed as a so- called tilt-sliding roof of which a panel 1 is adjustable between a closed position in an opening in the fixed roof of the vehicle and backwardly inclined tilted venting position on one hand, and between the closed position and backwardly displaced positions below the fixed roof on the other hand. For this purpose the panel 1 is adjustably supported on either side of the roof opening by means of an adjusting mechanism not shown. Each adjusting mechanism is slidably guided in a respective longitudinal stationary guide rail 2 fixed to a frame 3. For the sake of completeness it should be understood that in the view of fig. 1 the front side of the open roof construction is directed downwardly.

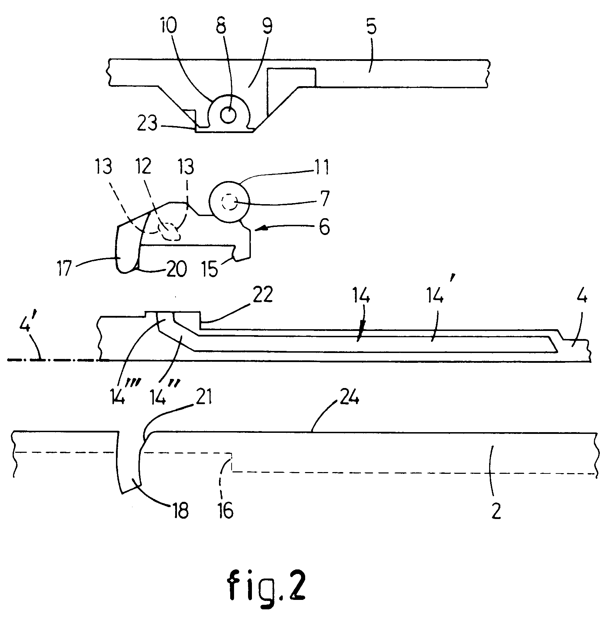

The adjusting mechanism is driven and controlled respectively by a driving part 4 and a driven part or control part 5, shown partially in fig. 2. The driving part 4 is connected with a pull-push cable 4' indicated by a dot and dash line and operated by an electrical drive or a manual crank. The driving part 4 and the control part 5 are both guided in the stationary guide rail 2 which may consist of an aluminium extruded section.

For controlling and driving the adjusting mechanism the driving part 4 which is directly or indirectly operatively connected to the adjusting member of the adjusting mechanism, and the control part 5 should be coupled to each other during the sliding movements of the panel 1 below the fixed roof, while the driving part 4 and the control part 5 should be uncoupled during the tilting movements of the panel 1, and the latter part should be locked with respect to the stationary guide rail 2.

For this purpose the present coupling device is provided. The coupling device comprises a coupling member 6 connected to the control part 5, pivotable about a substantially vertical pivot axis. The coupling member 6 is pivotable between a coupling position, in which it couples the control part 5 to the driving part 4, and a locking position, in which it locks the control part 5 with respect to the stationary guide rail 2. For this purpose the coupling member 6 has a vertical pivot pin 7 which is freely rotatable in a cavity 8 in a lateral extension 9 of the control part 5. On behalf of the stable guiding and retaining of the coupling member 6 the lateral extension 9 of the control part 5 is provided with a cylindrical segment-shaped recess 10 in which a cylindrical collar 11 of the coupling member 6 is received, the cylindrical collar 11 extending concentrically about the pivot pin.

The coupling member 6 further comprises a guide cam 12 formed on the lower side thereof. This guide cam 12 has a pair of parallel guide surfaces 13. The guide cam 12 is guided in and is controlled by a guide slot 14 provided in the driving part 4 and being opened upwardly. This guide slot 14 has a rear slot portion 14' extending in the direction of movement of the driving part 4, an intermediate slot portion 14" adjoining to the front end of the rear slot portion 14' and inclining forwardly in the direction to the control part 5, and a front slot portion 14''' extending substantially transverse to the direction of movement of the control part 5. The guide cam 12 of the coupling member 6 is formed and disposed with respect to the pivot pin 7 in such a way that, when the guide cam 12 is in the front or rear slot portion 14''', or 14' respectively, the guide surfaces 13 of the guide cam 12 engage the side walls of the slot 14, and during the passage through the intermediate slot portion 14" the guide cam 12 is able to turn in the guide slot 14.

The coupling member 6 is provided on its rear end with a stop cam 15 facing away from the control part 5 and lying sidewardly spaced from the pivot pin 7 in the coupling position of the coupling member 6, the guide cam 15 being able to co-operate with a rearwardly facing stop shoulder 16 formed on the stationary guide rail 2 and lying in the path of the stop cam 15, the co-operation being such that the coupling member 6 is rotated about the pivot pin 7 upon a forward displacement of the coupling member 6. At its front end the coupling member 6 being provided with a locking nose 17 facing away from the control part 5. This locking nose 17 is able to fittingly engage into a locking recess 18 in an insert 19 forming part of the guide rail 2. The locking nose 17 and the locking recess 18 are slightly curved such that the locking nose 17 can enter and leave the locking recess 18 while rotating about the vertical pivot pin 7. The locking nose 17 is constructed of an upper nose portion 17′ and a lower nose portion 17″. The upper nose portion 17′ has near its end on the rear side a guiding surface 20 adapted to co-operate with a guiding surface 21 forming part of the rear wall of the locking recess 18 and inclining backwardly in the direction to the control part 5.

The driving part 4 and the control part 5 are provided on their sides facing each other with co-operating stop shoulders 22, and 23 respectively. The stop shoulder 22 of the driving part 4 is facing backwardly, and the stop shoulder 23 of the control part 5 is directed forwardly. Since both stop shoulders 22 and 23 are lying in each others' paths in the stationary guide rail 2, both stop shoulders 22 and 23 will come into engagement with one another upon a rearward displacement of the driving part 4, whereby the control part 5 will be carried along by the driving part 4.

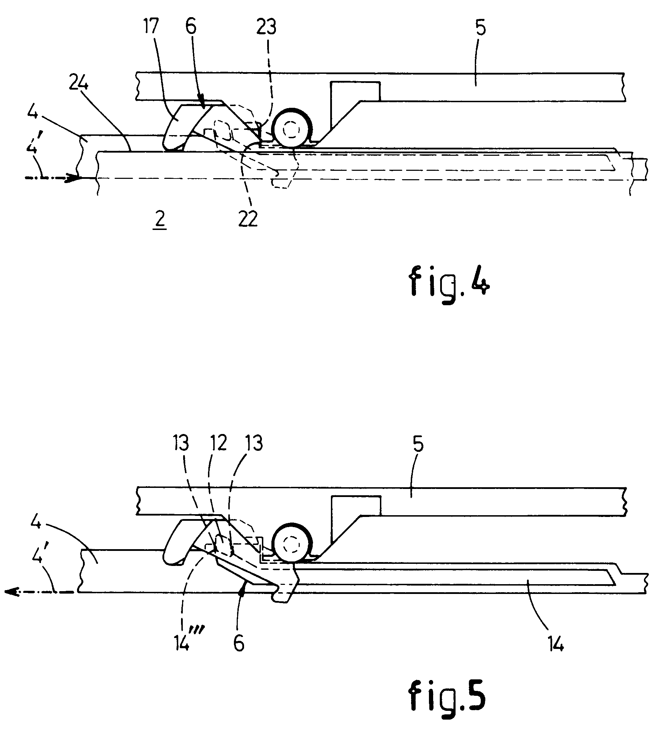

The stationary guide rail 2 further has a longitudinal edge 24 lying at the height of the locking nose 17 of the coupling member 6 and facing the coupling member 6, the longitudinal edge 24 being shown in fig. 2 and 4, but being omitted in the remaining figures for the sake of clarity.

The operation of the coupling device according to the invention will hereafter be elucidated with reference to fig. 4-11.

Fig. 4 shows the coupling device in the position wherein the panel is adjusted into a rearwardly slid position below the fixed roof and is moved in rearward direction. The driving of the sliding movement of the panel 1 from the pull-push cable 4′ takes place through the driving part 4, the control part 5 and the adjusting mechanism (not shown) which is connected to the panel 1. The drive force between the driving part 4 and the control part 5 is transmitted by both stop shoulders 22 and 23 thereof.

The locking nose 17 of the coupling member 6 is laterally confined with play between a longitudinal edge of the control part 5 and the longitudinal edge 24 of the stationary guide rail 2. Consequently, the coupling member 6 is positively prevented from being displaced out of the coupling position shown in fig. 4 and 5 by an cause.

In fig. 5 the direction of movement of the driving part is reversed and the panel is moved in the direction to the closed position. In the position shown the guide cam 12 of the coupling member 6 is still in the front slot portion 14‴ which extends substantially transverse to the direction of movement of the driving part 4, so that the guide cam 12 is held in this position in a stable manner. The driving part 4 and the control part 5 are coupled to each other through the coupling member 6, in particular through the engagement of the guide cam 12 in the guide slot 14 of the driving part 4 and the pivot connection 7, 8 between the coupling member 6 and the control part 5. Herein it is an advantage that the line of connection between the pivot pin 7 and the guide cam 12 of the coupling member 6 extends substantially parallel to the direction of movement of the driving part 4 in this position, whereby no or substantially no torque is exerted on the coupling member 6 or the driving part 4 and the control part 5. As a consequence thereof, the driving part 4 is experiencing no additional resistance when it is moved.

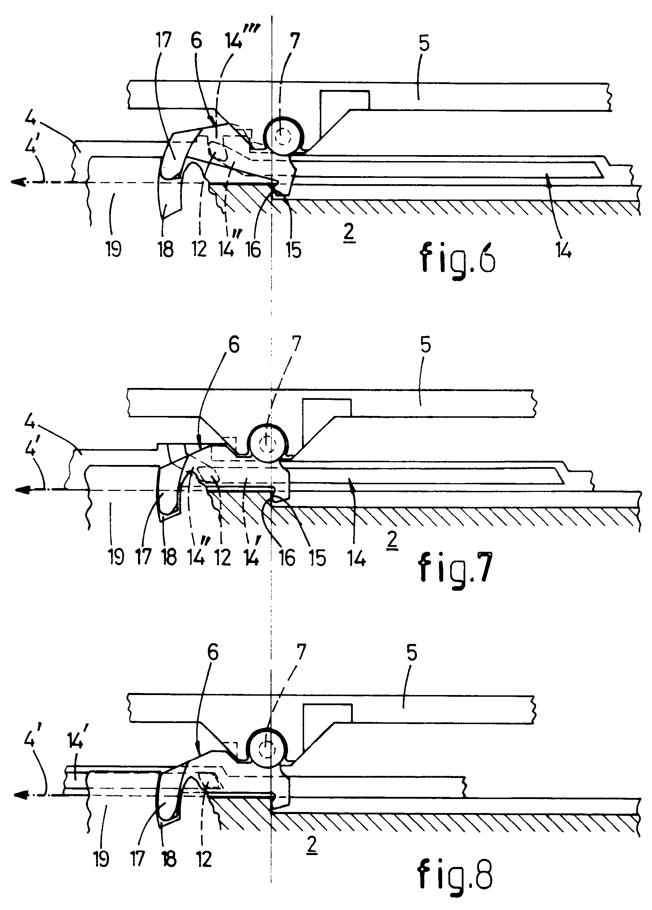

Fig. 6 shows the position of the coupling device, wherein the stop cam 15 of the coupling member 6 has come into engagement with the stop shoulder 16 of the stationary guide rail 2. As a result a torque about the pivot pin 7 is exerted on the coupling member 6 and will cause the coupling member 6 to pivot about this pivot pin 7. Consequently the locking nose 17 enters the locking recess 18, while the guide cam 12 moves from the front slot portion 14‴ of the guide slot 14 extending substantially transverse to the direction of movement of the driving part into the intermediate slot portion 14″ inclining to said direction of movement. Because the locking nose 17 has entered into the locking recess 18 it is only possible for the control part 5 to move very slightly in dependence of the engagement of the locking nose 17 in the locking recess 18.

In fig. 7, the coupling member 6 has pivoted about the pivot pin 7 to such an extent that the extreme position thereof is reached and the locking nose 17 has maximally moved into the locking recess 18. The pivoting movement of the coupling member 6 between the positions of fig. 6 and 7 is determined by the relative movement between the inclined slot portion 14″ of the guide slot 14 in the driving part 4 and the guide cam 12 of the coupling member 6. In fig. 7, the guide cam 12 is set at the transition between the inclined intermediate slot portion 14″ and the longitudinal rear slot portion 14′.

Fig. 8 illustrates the position of the coupling device wherein the driving part 4 has reached its front position. This means that the adjusting mechanism is brought to its maximally extended position wherein the panel is in its extreme venting position. Between the positions of fig. 7 and 8 the control part 5 is fully locked with respect to the stationary guide rail 2 by the coupling member 6. The operation of the adjusting mechanism of the panel is then completely determined by the relative displacement between the driving part 4 and the control part 5 and the control members of the control part 5. The coupling member 6 is retained in its locking position by the engagement of the guide cam 12 in the rear slot portion 14' of the guide slot 14 in the driving part 4, whereby the coupling member 6 is prevented from pivoting about the pivot pin 7.

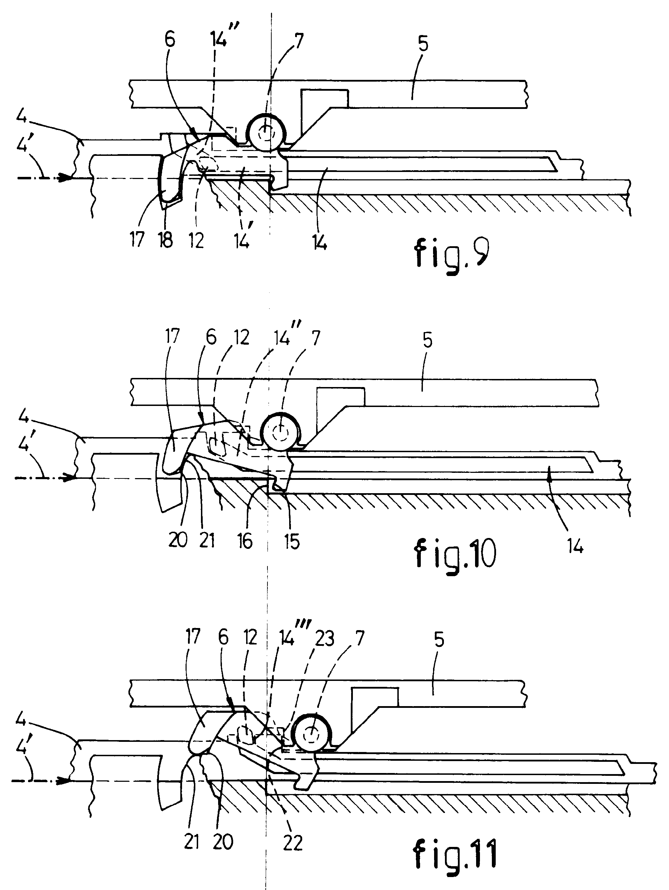

In fig. 9, the driving part 4 has been moved back again to such an extent that the position of fig. 7 is reached.

Fig. 10 shows the position of the coupling device wherein the driving part 4 is slid further backwardly such that the guide cam 12 of the coupling member 6 has passed through the inclined intermediate slot portion 14" and has reached the front slot portion 14'''. As a result of the slight play of the locking nose 17 in the locking recess 18 in the position of fig. 10, the coupling member 6 is slid rearwardly by the control part 5, which is driven by the driving part 4 as a consequence of the engagement of the shoulders 22 and 23, such that the stop cam 15 has come out of engagement with the stop shoulder 16. A further pivoting movement of the coupling member 6 by means of the engagement of the guide cam 12 thereof in the guide slot 14 of the driving part 4 is not possible, since the front slot portion 14'''extends substantially transverse to the direction of movement of the driving part, so that through this engagement almost no lateral force can be transmitted to the guide cam 12. In order to bring the locking nose 17 out of engagement with the locking recess 18, the guiding surfaces 20 and 21 are formed on the locking nose 17 and the locking recess 18, which effectuate by their engagement that the locking nose 17 is displaced laterally upon a rearward displacement of the driving part 4 and consequently the coupling member 6, so that the coupling member 6 is pivoted about the pivot pin 7 until the locking nose 18 is urged completely out of the locking recess 18.

In fig. 11, the coupling device has reached again the initial position according to fig. 4.

According to the invention there is provided a coupling device in the drive mechanism for a movable panel of an open roof construction for a vehicle, which comprises a fully forcibly guided and positively retained coupling member which, in the coupled position, exerts no force onto the drive mechanism which could cause additional friction.

## Claims

1. Coupling device in the drive mechanism for a movable panel of an open roof construction for a vehicle, intended to alternately couple and uncouple a driving part (4) and a driven part (5) with respect to each other, or with respect to a stationary part (2), respectively, comprising a coupling member (6) connected to the driven part (5) and being adjustable transverse to the direction of movement of the driven part (5), the coupling member (6) being movable between a coupling position in which it couples the driven part (5) with the driving part (4), and a locking position in which it locks the driven part (5) with respect to the stationary part (2) ; and a counter member (18) with which a locking portion (17) of the coupling member (6) is in engagement in the locking position, wherein the coupling member (6) and the stationary part (2) are provided with cooperating guide elements (15, 16, 20, 21) to bring the locking portion (17) of the coupling member (6) and the counter member (18) into and out of engagement with each other, **characterized** in that the coupling member (6) and the driving part (4) also have cooperating guide elements (12, 13, 14) and in that the guide elements (12-16, 20, 21) of the stationary part (2), the driving part (4) and the coupling member together form a forcing guide for the coupling member (6) allowing only a movement of the locking portion (17) of the coupling member (6) into and out of engagement with its counter member (18) in the stationary part.

2. Coupling device according to claim 1, **characterized** in that the guide elements (15, 16 ; 20, 21) of the stationary part (2) and the coupling member (6) effect the first initial movement from the coupling position and the last return movement to the coupling position, wherein for each of these movements separate guide elements (15, 16 ; 20, 21) being provided, and the remaining movements of the coupling member (6) being determined by the guide elements (12, 14) between the coupling member (6) and the driving part (4).

3. Coupling device according to claim 1 or 2, **characterized** in that the coupling member (6) is connected to the driven part (5) pivotable about a substantially vertical pivot axis (7) between the coupling position and the locking position.

4. Coupling device according to claim 3, **characterized** in that the coupling member (6) is provided with a stop cam (15) positioned sideways spaced from the pivot axis (7) in the coupling position of the coupling member (6), and the stationary part (2) being provided with a stop shoulder (16) facing backwardly and lying in the path of the stop cam (15).

5. Coupling device according to claim 3 or 4, **characterized** in that the coupling member (6) is provided with a locking nose (17) which is able to engage into a locking recess (18) formed in the stationary part (2) and serving as counter part.

6. Coupling device according to claim 5, **characterized** in that the rear wall of the locking recess (18) in the stationary part (2) is partly formed as a guiding surface (21) inclined backwardly in the direction to the driven part and being adapted to cooperate with a guiding surface (20) formed on the locking nose (17)

of the coupling member (6).

7. Coupling device according to one of claims 2-6, **characterized** in that the driving part (4) is provided with a guide slot (14) whose side walls form the guide elements, and the coupling member (6) comprising a guide cam (12) serving as guide element and being in engagement with the guide slot (14) of the driving part (4).

8. Coupling device according to claim 7, **characterized** in that the guide slot (14) in the driving part comprises a rear slot portion (14′) parallel to the direction of movement of the driving part (4), an intermediate slot portion (14″) inclining to said direction of movement, and a front slot portion (14‴) substantially transverse to said direction of movement.

9. Coupling device according to one of the preceding claims, **characterized** in that, in the coupling position of the coupling member (6), the line of connection between the point of engagement (12, 14‴) of the coupling member (6) with the driving part (4) and the point of engagement (7, 8) of the coupling member (6) with the driven part (5) extends substantially parallel to the direction of movement of the driving part (4).

10. Coupling device according to one of the preceding claims, **characterized** in that the driving part (4) is provided with a backwardly facing stop shoulder (22), and the driven part (5) comprising a forwardly facing stop shoulder (23) lying in the path of said stop shoulder (22).

11. Coupling device according to one of claims 5-10, **characterized** in that in the coupling position of the coupling member (6) the locking nose (17) thereof is laterally retained with play between a longitudinal edge of the driven part (5) and a longitudinal edge (24) of the stationary part (2).

12. Coupling device according to one of the preceding claims, **characterized** in that the driven part (5) is formed by a control part for controlling an adjusting mechanism for the panel (1), and the stationary part (2) consisting of a stationary guiding rail for guiding the adjusting mechanism.

**Patentansprüche**

1. Kupplungsvorrichtung im Antriebsmechanismus für eine bewegliche Platte einer Schiebehebedachkonstruktion für ein Kraftfahrzeug, vorgesehen, um ein Antriebsteil (4) und ein angetriebenes Teil (5) abwechselnd gegenseitig bzw. mit einem feststehenden Teil (2) zu kuppeln oder zu entkuppeln, mit einem Kupplungsteil (6), das mit dem angetriebenen Teil (5) verbunden ist und quer zu der Bewegungsrichtung des angetriebenen Teils verstellbar ist, wobei das Kupplungsteil zwischen einer Kupplungsposition, in der es das angetriebene Teil (5) mit dem Antriebsteil (4) kuppelt, und einer Feststellposition bewegbar ist, in der es das angetriebene Teil (5) mit einem feststehenden Teil (2) verriegelt ; und einem Gegenstück (18), mit dem ein Feststellstück (17) des Kupplungsteils (6) in der Feststellposition in Eingriff ist, wobei das Kupplungsteil und das feststehende Teil (2) mit zusammenarbeitenden Führungselementen (15, 16, 20, 21) ausgestattet sind, um das Feststellstück (17) des Kupplungsteils (6) und das Gegenstück (18) in und außer Eingriff miteinander zu bringen, dadurch **gekennzeichnet**, daß das Kupplungsteil (6) und das Antriebsteil (4) auch zusammenarbeitende Führungselemente aufweisen (12, 13, 14) und daß die Führungselemente (12-16, 20, 21) des feststehenden Teils (2), des Antriebsteils und des Kupplungsteils eine Zwangsführung für das Kupplungsteil (6) bilden, die nur eine Bewegung des Feststellstückes (17) und des Kupplungsteils (6) in und außer Eingriff mit seinem Gegenstück (18) in dem feststehenden Teil erlaubt.

2. Kupplungsvorrichtung gemäß Anspruch 1, dadurch **gekennzeichnet,** daß die Führungselemente (15, 16 ; 20, 21) des feststehenden Teils (2) und des Kupplungsteils (6) die erste anfängliche Bewegung aus der Kupplungsposition und die letzte Rückwärtsbewegung in die Kupplungsposition bewirken, wobei für jede dieser Bewegungen gesonderte Führungselemente (15, 16 ; 20, 21) vorhanden sind und die übrigen Bewegungen des Kupplungsteils (6) durch die Führungselemente (12, 14) zwischen dem Kupplungsteil (6) und dem Antriebsteil (4) bestimmt werden.

3. Kupplungsvorrichtung gemäß Anspruch 1 oder 2, dadurch **gekennzeichnet**, daß das Kupplungsteil (6) mit dem angetriebenen Teil (5) verbunden ist, das um eine im wesentlichen vertikale Schwenkachse (7) zwischen der Kupplungsposition und der Feststellposition schwenkbar ist.

4. Kupplungsvorrichtung gemäß Anspruch 3, dadurch **gekennzeichnet**, daß das Kupplungsteil (6) mit einer Haltenocke (15) versehen ist, die in der Kupplungsposition des Kupplungsteils (6) seitlich von der Schwenkachse (7) angeordnet ist, und daß das feststehende Teil (2) mit einer Stopschulter (16) versehen ist, die nach hinten weist und in der Bahn der Haltenocke (15) liegt.

5. Kupplungsvorrichtung gemäß Anspruch 3 oder 4, dadurch **gekennzeichnet**, daß das Kupplungsteil (6) mit einer Feststellnase (17) versehen ist, die in eine Feststellausnehmung (18) eingreifen kann, die in dem feststehenden Teil (2) ausgebildet ist und als Gegenstück dient.

6. Kupplungsvorrichtung gemäß Anspruch 5, dadurch **gekennzeichnet**, daß die hintere Begrenzung der Feststellausnehmung (18) in dem feststehenden Teil (2) teilweise als eine Führungsfläche (21) geformt ist, die in Richtung auf das angetriebene Teil zu nach hinten geneigt und so angepaßt ist, daß sie mit einer Führungsfläche (20) zusammenarbeitet, die auf der Feststellnase (17) des Kupplungsteils (6) ausgebildet ist.

7. Kupplungsvorrichtung gemäß einem der Ansprüche 2-6, dadurch **gekennzeichnet**, daß das Antriebsteil (4) mit einem Führungsschlitz (14) versehen ist, dessen Seitenwände die Führungselemente bilden, und das Kupplungsteil (6) einen Führungsmitnehmer (12) aufweist, der als Führungselement dient und mit dem Führungsschlitz (14) des Antriebsteils (4) in Eingriff steht.

8. Kupplungsvorrichtung gemäß Anspruch 7, dadurch **gekennzeichnet**, daß der Führungsschlitz (14) einen hinteren Schlitzabschnitt (14'), der parallel zur Bewegungsrichtung des Antriebsteils (4) ist, einen mittleren Schlitzabschnitt (14''), der in der Bewegungsrichtung geneigt ist, und einen vorderen Schlitzabschnitt (14''') aufweist, der wesentlich quer zu der Bewegungsrichtung verläuft.

9. Kupplungsvorrichtung gemäß einem der vorausgegangenen Ansprüche, dadurch **gekennzeichnet**, daß in der Kupplungsposition des Kupplungsteils (6) die Verbindunglinie zwischen dem Eingriffspunkt (12, 14''') des Kupplungsteils (6) mit dem Antriebsteil (4) und dem Eingriffspunkt (7, 8) des Kupplungsteils (6) mit dem angetriebenen Teil (5) sich im wesentlichen parallel zu der Bewegungsrichtung des Antriebsteils (4) erstreckt.

10. Kupplungsvorrichtung gemäß einem der vorhergegangenen Ansprüche, dadurch **gekennzeichnet**, daß das Antriebsteil (4) mit einer nach hinten weisenden Stopschulter (22) versehen ist und das angetriebene Teil (5) eine nach vorn weisende Stopschulter (23) aufweist, die in der Bahn der Stopschulter (22) liegt.

11. Kupplungsvorrichtung gemäß einem der Ansprüche 5-10, dadurch **gekennzeichnet**, daß in der Kupplungsposition des Kupplungsteils (6) dessen Feststellnase (17) seitlich mit Spiel zwischen einem Längsrand des angetriebenen Teils (5) und einem Längsrand (24) des feststehenden Teils (2) aufgenommen ist.

12. Kupplungsvorrichtung gemäß einem der vorhergehenden Ansprüche, dadurch **gekennzeichnet**, daß das angetriebene Teil (5) gebildet ist von einem Steuerteil zum Steuern eines Einstellmechanismus für die Platte (1), wobei das feststehende Teil (2) aus einer feststehenden Führungsschiene besteht, die den Einstellmechanismus führt.

**Revendications**

1. Dispositif d'accouplement dans le mécanisme d'entraînement d'un panneau mobile d'une construction de toit ouvrant pour un véhicule, conçu pour alternativement accoupler et désaccoupler une partie menante (4) et une partie menée (5) l'une par rapport à l'autre, ou par rapport à une partie fixe (2), respectivement, comportant un organe d'accouplement (6) relié à la partie menée (5) et pouvant être réglé transversalement à la direction du mouvement de la partie menée (5), l'organe d'accouplement (6) étant mobile entre une position d'accouplement dans laquelle il accouple la partie menée (5) à la partie menante (4), et une position de verrouillage dans laquelle il verrouille la partie menée (5) par rapport à la partie fixe (2) ; et un contre-organe (18) avec lequel une partie de verrouillage (17) de l'organe d'accouplement (6) est enclenchée dans la position de verrouillage, l'organe d'accouplement (6) et la partie fixe (2) étant pourvus d'éléments coopérants (15, 16, 20, 21) de guidage pour amener la partie de verrouillage (17) de l'organe d'accouplement (6) et le contre-organe (18) en enclenchement mutuel et les dégager l'un de l'autre, caractérisé en ce que l'organe d'accouplement (6) et la partie menante (4) comportent aussi des éléments coopérants (12, 13, 14) de guidage, et en ce que les éléments de guidage (12-16, 20, 21) de la partie fixe (2), de la partie menante (4) et de l'organe d'accouplement forment ensemble un guidage forcé pour l'organe d'accouplement (6), permettant uniquement un mouvement de la partie (17) de verrouillage de l'organe d'accouplement (6) jusqu'en enclenchement avec son contre-organe (18) dans la partie fixe, et dégagement de son contre-organe (18).

2. Dispositif d'accouplement selon la revendication 1, caractérisé en ce que les éléments de guidage (15, 16 ; 20, 21) de la partie fixe (2) et de l'organe d'accouplement (6) effectuent le premier mouvement initial depuis la position d'accouplement et le dernier mouvement de retour vers la position d'accouplement, des éléments séparés (15, 16, 20, 21) de guidage étant prévus pour chacun de ces mouvements, et les autres mouvements de l'organe (6) d'accouplement étant déterminés par les éléments de guidage (12, 14) entre l'organe d'accouplement (6) et la partie mobile (4).

3. Dispositif d'accouplement selon la revendication 1 ou 2, caractérisé en ce que l'organe (6) d'accouplement est relié à la partie menée (5) de façon à pouvoir pivoter autour d'un axe de pivot sensiblement vertical (7) entre la position d'accouplement et la position de verrouillage.

4. Dispositif d'accouplement selon la revendication 3, caractérisé en ce que l'organe d'accouplement (6) est pourvu d'une came (15) de butée placée latéralement et à distance de l'axe (7) de pivot dans la position d'accouplement de l'organe (6) d'accouplement, la partie fixe (2) étant pourvue d'un épaulement (16) de butée tourné vers l'arrière et s'étendant sur le trajet de la came (15) de butée.

5. Dispositif d'accouplement selon la revendication 3 ou 4, caractérisé en ce que l'organe (6) d'accouplement est pourvu d'un nez (17) de verrouillage pouvant s'engager dans un évidement (18) de verrouillage formé dans la partie fixe (2) et servant de contre-partie.

6. Dispositif d'accouplement selon la revendication 5, caractérisé en ce que la paroi arrière de l'évidement (18) de verrouillage dans la partie fixe (2) est en forme partiellement de surface (21) de guidage inclinée vers l'arrière dans la direction de la partie menée et conçue pour coopérer avec une surface (20) de guidage formée sur le nez (17) de verrouillage de l'organe (6) d'accouplement.

7. Dispositif d'accouplement selon l'une des revendications 2-6, caractérisé en ce que la partie menante (4) est pourvue d'une fente (14) de guidage dont des parois latérales forment les éléments de guidage, et l'organe (6) d'accouplement comprenant une came (2) de guidage servant d'élément de guidage et enclenchée avec la fente (14) de guidage de la partie menante (4).

8. Dispositif d'accouplement selon la revendication 7, caractérisé en ce que la fente (14) de guidage de la partie menante comprend un tronçon de fente arrière (14') parallèle à la direction du mouvement de la partie menante (4), un tronçon de fente intermédiaire (14'') s'inclinant par rapport à ladite direction du mouvement, et un tronçon de fente avant (14''') sensiblement transversal à ladite direction du mouvement.

9. Dispositif d'accouplement selon l'une des revendications précédentes, caractérisé en ce que, dans la position d'accouplement de l'organe d'accouplement (6), la ligne de liaison entre le point d'enclenchement (12, 14''') de l'organe d'accouplement (6) avec la partie menante (4) et le point d'enclenchement (7, 8) de l'organe (6) d'accouplement avec la partie menée (5) s'étend à peu près parallèlement à la direction du mouvement de la partie menante (4).

10. Dispositif d'accouplement selon l'une des revendications précédentes, caractérisé en ce que la partie menante (4) est pourvue d'un épaulement de butée (22) tourné vers l'arrière, et la partie menée (5) comporte un épaulement de butée (23) tourné vers l'avant, s'étendant sur le trajet dudit épaulement de butée (22).

11. Dispositif d'accouplement selon l'une des revendications 5-10, caractérisé en ce que, dans la position d'accouplement de l'organe d'accouplement (6), le nez (17) de verrouillage de celui-ci est retenu latéralement avec du jeu entre un bord longitudinal de la partie menée (5) et un bord longitudinal (24) de la partie fixe (2).

12. Dispositif d'accouplement selon l'une des revendications précédentes, caractérisé en ce que la partie menée (5) est formée par une partie de commande destinée à commander un mécanisme de réglage pour le panneau (1), et la partie fixe (2) est constituée d'un rail fixe de guidage destiné à guider le mécanisme de réglage.

3

2

2

1

6

6

19

II

19

## fig.1

11

6

17'

17

17"

15

5

9

10

8

## fig.3

fig.2

fig.4

fig.5

fig.6

fig.7

fig.8

fig.9

fig.10

fig.11